# EUROPEAN PATENT SPECIFICATION

(11) **EP 4 606 498 B1**
(45) Date of publication and mention of the grant of the patent: **02.12.2026**
(21) Application number: 23879719.5
(22) Date of filing: 13.10.2023
(51) Int. Cl.: B21D 5/02, G01B 11/26

(54) **PRESS BRAKE, AND PRESS BRAKE CONTROL METHOD**
ABKANTPRESSE UND ABKANTPRESSENSTEUERUNGSVERFAHREN
FREIN DE PRESSE ET PROCÉDÉ DE COMMANDE DE FREIN DE PRESSE

(30) Priority: 21.10.2022 JP 2022169329
(43) Date of publication of application: 27.08.2025
(73) Proprietor: Amada Co., Ltd., Isehara-shi, Kanagawa 259-1196 (JP)
(72) Inventor: AMANO, Kanehide, Isehara-shi, Kanagawa 259-1196 (JP); UESUGI, Satoru, Isehara-shi, Kanagawa 259-1196 (JP); SASAKI, Hideki, Isehara-shi, Kanagawa 259-1196 (JP)
(74) Representative: Grünecker Patent- und Rechtsanwälte PartG mbB
(86) International application number: PCT/JP2023/037146
(87) International publication number: WO 2024/085076

(56) References cited:
- JP-A- 2000 051 949
- JP-A- 2001 074 407
- JP-A- 2004 202 545
- JP-A- 2013 180 339
- JP-A- 2013 180 339
- JP-A- 2015 221 447
- JP-A- 2016 196 044
- JP-B2- 4 280 332
- US-A1- 2020 180 003
- DUFLOU ET AL: "Computer aided process planning for sheet metal bending: A state of the art", COMPUTERS IN INDUSTRY, ELSEVIER, AMSTERDAM, NL, vol. 56, no. 7, 1 September 2005 (2005-09-01), pages 747 - 771, XP005045576, ISSN: 0166-3615

## Description

### [TECHNICAL FIELD]

The present disclosure relates to a press brake and a press brake control method.

### [BACKGROUND ART]

A press brake includes an upper table on which a punch is mounted and a lower table on which a die is mounted. The upper table is lowered to the lower table, and a sheet metal arranged on the die is interposed between the punch and the die and is bent (see Patent Literature 1). JP 2013 180339 A, which forms the basis for the preamble of claims 1 and 5, discloses a press brake applying temporary bending to a workpiece by using computed bending conditions of the workpiece. The temporary bending is applied to the workpiece by means of a computed temporary bending D-value. A bending angle during applied pressure is measured in a state in which the temporary bending is applied and the temporary bending angle during the unloading of the workpiece is measured after the measurement of the temporary bending angle during the applied pressure. A true D-value for being used to apply permanent bending to the workpiece and a correction amount in crowning are computed by means of these measurement values to apply the bending to the workpiece.

### [Citation List]

### [Patent Literature]

[Patent Literature 1] Japanese Patent No. 4280332

### [SUMMARY OF INVENTION]

Even if a press brake bends a sheet metal to have a target bending angle, a bending angle of the bent sheet metal becomes wider than the target bending angle due to spring back. Therefore, in order to bend the sheet metal to have the target bending angle, it is necessary to bend the sheet metal to have a bending angle which is narrower than the target bending angle in consideration of the spring back. Meanwhile, if a finally obtained bending angle is narrower than the target bending angle, it is not possible to use the bent sheet metal as a product, and it becomes necessary to bend a new sheet metal. Therefore, when an attempt is made to bend the sheet metal to have the target bending angle, after the sheet metal is bent to have a bending angle wider than the target bending angle, as a driving operation, the sheet metal is bent such that the bending angle is gradually reduced to the target bending angle.

An operator measures whether the sheet metal bent in this way is actually bent to have the target bending angle by using a digital bending angle gauge which is referred to as a digital protractor. This is because, since the spring back amount varies depending on the variation in the thickness or hardness of the sheet metal, it is necessary for the operator to confirm whether the sheet metal is actually bent to have the target bending angle. The predetermined time is required to measure a bending angle of the bent sheet metal using the digital bending angle gauge, and this increases the processing time from the start of bending of the sheet metal to the confirmation of a bending angle after the end of bending. It is desirable to reduce the processing time as much as possible.

A first aspect of one or more embodiments provides a press brake including: an upper table on which a punch is mounted; a lower table on which a die is mounted; a table lifting mechanism that raises and lowers the upper table or the lower table; an angle sensor that measures an angle of a sheet metal, when the table lifting mechanism raises and lowers the upper table or the lower table and bends the sheet metal, while the sheet metal is interposed between the punch and the die; and a control device that calculates a bending angle of the sheet metal based on an angle of the sheet metal measured by the angle sensor and that controls the table lifting mechanism to lower the upper table or to raise the lower table, in which when the control device controls the table lifting mechanism to lower the upper table or to raise the lower table to bend the sheet metal to have a target bending angle, the control device controls the table lifting mechanism to lower the upper table by a first depth value or to raise the lower table by the first depth value such that the sheet metal is bent to have a predetermined temporary bending angle that is wider than the target bending angle during a temporary bending period, the control device calculates a first bending angle of the sheet metal bent to have the temporary bending angle based on the angle of the sheet metal measured by the angle sensor, the control device, during a load removal period after the sheet metal is bent to have the temporary bending angle, controls the table lifting mechanism to raise the upper table or to lower the lower table to remove a load applied to the sheet metal, while keeping a state in which the punch is in contact with the sheet metal, the control device, while the load applied to the sheet metal is removed during the load removal period, calculates a second bending angle of the sheet metal based on the angle of the sheet metal measured by the angle sensor and calculates a spring back amount based on a difference between the second bending angle and the first bending angle, the control device calculates a second depth value for bending the sheet metal to have the target bending angle in consideration of the spring back amount during a driving period and controls the table lifting mechanism to lower the upper table by the second depth value or to raise the lower table by the second depth value, and the control device, during a final angle measurement period after the sheet metal is bent to have the target bending angle, removes the load applied to the sheet metal, while keeping the state in which the punch is in contact with the sheet metal, controls the table lifting mechanism to raise the upper table or to lower the lower table, and calculates a final bending angle of the sheet metal based on the angle of the sheet metal measured by the angle sensor. Furthermore, the control device sets a raising amount in which the upper table is raised or a lowering amount in which the lower table is lowered for removal of the load applied to the sheet metal during the final angle measurement period, based on a raising amount in which the upper table is raised or a lowering amount in which the lower table is lowered for the removal of the load applied to the sheet metal up to a middle step before the removal of the load during the load removal period ends, or a raising amount in which the upper table is raised or a lowering amount in which the lower table is lowered until the removal of the load applied to the sheet metal ends.

According to the first aspect of one or more embodiments, after the sheet metal is bent to have the target bending angle, the control device removes the load applied to the sheet metal, while keeping the state in which the punch is in contact with the sheet metal, and the control device calculates the final bending angle of the sheet metal based on the angle of the sheet metal measured by the angle sensor. Therefore, it is not necessary for an operator to measure whether the sheet metal is actually bent to have the target bending angle by using a digital bending angle gauge. This can reduce the processing time from the start of bending of the sheet metal to the confirmation of a bending angle after the end of bending.

A second aspect of one or more embodiments provides a press brake control method performed by a control device that controls a press brake including: an upper table on which a punch is mounted; a lower table on which a die is mounted; a table lifting mechanism that raises and lowers the upper table or the lower table; and an angle sensor that measures an angle of a sheet metal which is interposed between the punch and the die and is bent, the press brake control method including: controlling the table lifting mechanism to lower the upper table by a first depth value or to raise the lower table by the first depth value such that the sheet metal is bent to have a predetermined temporary bending angle that is wider than a target bending angle during a temporary bending period; calculating a first bending angle of the sheet metal bent to have the temporary bending angle based on an angle of the sheet metal measured by the angle sensor; during a load removal period after the sheet metal is bent to have the temporary bending angle, controlling the table lifting mechanism to raise the upper table or to lower the lower table to remove a load applied to the sheet metal, while keeping a state in which the punch is in contact with the sheet metal; while the load applied to the sheet metal is removed during the load removal period, calculating a second bending angle of the sheet metal based on the angle of the sheet metal measured by the angle sensor and calculating a spring back amount based on a difference between the second bending angle and the first bending angle; calculating a second depth value for bending the sheet metal to have the target bending angle in consideration of the spring back amount during a driving period and controlling the table lifting mechanism to lower the upper table by the second depth value or to raise the lower table by the second depth value; and during a final angle measurement period after the sheet metal is bent to have the target bending angle, removing the load applied to the sheet metal, while keeping the state in which the punch is in contact with the sheet metal, controlling the table lifting mechanism to raise the upper table or to lower the lower table, and calculating a final bending angle of the sheet metal based on the angle of the sheet metal measured by the angle sensor.

Furthermore, the control device sets a raising amount in which the upper table is raised or a lowering amount in which the lower table is lowered for removal of the load applied to the sheet metal during the final angle measurement period, based on a raising amount in which the upper table is raised or a lowering amount in which the lower table is lowered for the removal of the load applied to the sheet metal up to a middle step before the removal of the load during the load removal period ends, or a raising amount in which the upper table is raised or a lowering amount in which the lower table is lowered until the removal of the load applied to the sheet metal ends.

According to the second aspect of one or more embodiments, after the sheet metal is bent to have the target bending angle, the control device removes the load applied to the sheet metal, while keeping the state in which the punch is in contact with the sheet metal, and the control device calculates the final bending angle of the sheet metal based on the angle of the sheet metal measured by the angle sensor. Therefore, it is not necessary for the operator to measure whether the sheet metal is actually bent to have the target bending angle by using a digital bending angle gauge. This can reduce the processing time from the start of bending of the sheet metal to the confirmation of a bending angle after the end of bending.

In accordance with a press brake and a press brake control method according to one or more embodiments, it is possible to reduce the processing time from the start of bending of a sheet metal to the confirmation of a bending angle after the end of bending.

### [BRIEF DESCRIPTION OF DRAWINGS]

[FIG. 1] FIG. 1 is a diagram illustrating an overall configuration of a press brake according to one or more embodiments.
[FIG. 2] FIG. 2 is a diagram illustrating a configuration example of an angle sensor of the press brake according to one or more embodiments.
[FIG. 3] FIG. 3 is a diagram illustrating an angle of a sheet metal detected by the angle sensor shown in FIG. 2.
[FIG. 4] FIG. 4 is a diagram illustrating a first example of a control operation performed by an NC device of the press brake according to one or more embodiments.
[FIG. 5] FIG. 5 is a diagram illustrating a second example of a control operation performed by the NC device of the press brake according to one or more embodiments.
[FIG. 6] FIG. 6 is a diagram illustrating a third example of a control operation performed by the NC device of the press brake according to one or more embodiments.
[FIG. 7] FIG. 7 is a flowchart illustrating a press brake operation according to one or more embodiments and a press brake control method according to one or more embodiments.

### [DESCRIPTION OF EMBODIMENTS]

A press brake according to one or more embodiments includes an upper table, a lower table, a table lifting mechanism, an angle sensor, and a control device. A punch is mounted on the upper table, and a die is mounted on the lower table. The table lifting mechanism raises and lowers the upper table or the lower table. The angle sensor measures an angle of a sheet metal, when the table lifting mechanism raises and lowers the upper table or the lower table and bends the sheet metal, while the sheet metal is interposed between the punch and the die. The control device calculates a bending angle of the sheet metal based on an angle of the sheet metal measured by the angle sensor and controls the table lifting mechanism to lower the upper table or to raise the lower table.

The control device controls raising and lowering of the upper table such that the sheet metal is bent to have a target bending angle as follows. The control device controls the table lifting mechanism to lower the upper table by a first depth value or to raise the lower table by the first depth value such that the sheet metal is bent to have a predetermined temporary bending angle that is wider than the target bending angle during a temporary bending period. The control device calculates a first bending angle of the sheet metal bent to have the temporary bending angle based on the angle of the sheet metal measured by the angle sensor.

The control device, during a load removal period after the sheet metal is bent to have the temporary bending angle, controls the table lifting mechanism to raise the upper table or to lower the lower table to remove a load applied to the sheet metal, while keeping a state in which the punch is in contact with the sheet metal. The control device, while the load applied to the sheet metal is removed during the load removal period, calculates a second bending angle of the sheet metal based on the angle of the sheet metal measured by the angle sensor and calculates a spring back amount based on a difference between the second bending angle and the first bending angle.

The control device calculates a second depth value for bending the sheet metal to have the target bending angle in consideration of the spring back amount during a driving period and controls the table lifting mechanism to lower the upper table by the second depth value or to raise the lower table by the second depth value. The control device, during a final angle measurement period after the sheet metal is bent to have the target bending angle, removes the load applied to the sheet metal, while keeping the state in which the punch is in contact with the sheet metal, controls the table lifting mechanism to raise the upper table or to lower the lower table, and calculates a final bending angle of the sheet metal based on the angle of the sheet metal measured by the angle sensor.

A press brake control method according to one or more embodiments is performed by a control device, and the control device controls a press brake including: an upper table on which a punch is mounted; a lower table on which a die is mounted; a table lifting mechanism that raises and lowers the upper table or the lower table; and an angle sensor that measures an angle of a sheet metal which is interposed between the punch and the die and is bent as follows.

The control device controls the table lifting mechanism to lower the upper table by a first depth value or to raise the lower table by the first depth value such that the sheet metal is bent to have a predetermined temporary bending angle that is wider than a target bending angle during a temporary bending period. The control device calculates a first bending angle of the sheet metal bent to have the temporary bending angle based on the angle of the sheet metal measured by the angle sensor.

The control device, during a load removal period after the sheet metal is bent to have the temporary bending angle, controls the table lifting mechanism to raise the upper table or to lower the lower table to remove a load applied to the sheet metal, while keeping a state in which the punch is in contact with the sheet metal. The control device, while the load applied to the sheet metal is removed during the load removal period, calculates a second bending angle of the sheet metal based on the angle of the sheet metal measured by the angle sensor and calculates a spring back amount based on a difference between the second bending angle and the first bending angle.

The control device calculates a second depth value for bending the sheet metal to have the target bending angle in consideration of the spring back amount during a driving period, and controls the table lifting mechanism to lower the upper table by the second depth value or to raise the lower table by the second depth value. The control device, during a final angle measurement period after the sheet metal is bent to have the target bending angle, removes the load applied to the sheet metal, while keeping the state in which the punch is in contact with the sheet metal, controls the table lifting mechanism to raise the upper table or to lower the lower table, and calculates a final bending angle of the sheet metal based on the angle of the sheet metal measured by the angle sensor.

The press brake and the press brake control method according to one or more embodiments will be specifically described below with reference to the accompanying drawings.

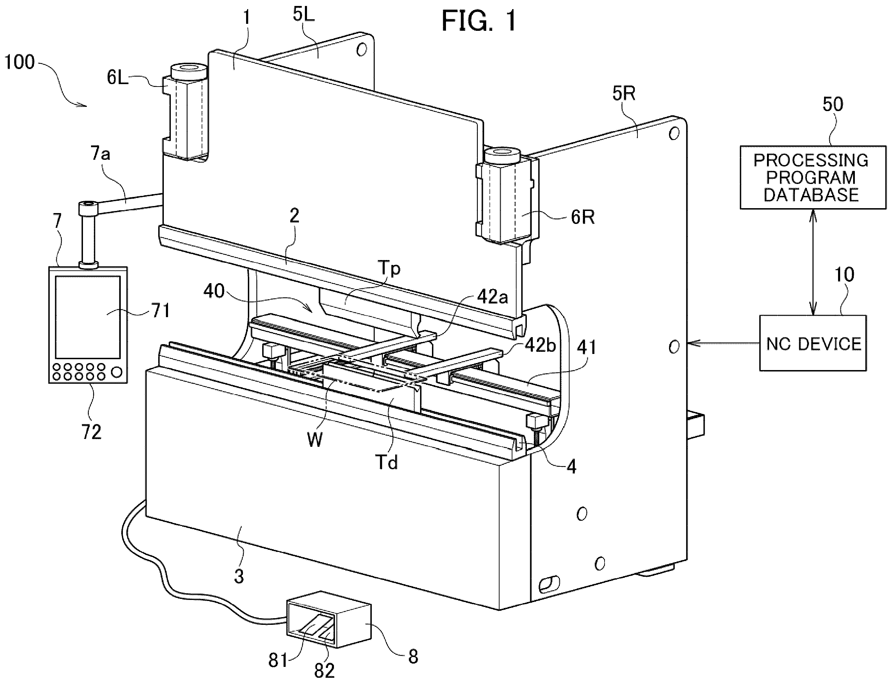

FIG. 1 shows an overall configuration of a press brake 100 according to one or more embodiments. As shown in FIG. 1, the press brake 100 includes a Numerical Control (NC) device 10 functioning as a control device for controlling the press brake 100. A processing program database 50 is connected to the NC device 10 via a network. The press brake 100 includes an upper table 1, a lower table 3, and right and left side plates 5R and 5L. An upper tool holder 2 is attached to the upper table 1, and a lower tool holder 4 is attached to the lower table 3.

The upper table 1 is configured to be raised and lowered by hydraulic cylinders 6L and 6R disposed on left and right sides thereof. The hydraulic cylinders 6L and 6R will be referred to as a table lifting mechanism 6. The table lifting mechanism 6 may include actuators other than the hydraulic cylinders 6L and 6R. The table lifting mechanism 6 lowers the upper table 1 such that the upper table 1 approaches the lower table 3, or raises the upper table 1 such that the upper table 1 is separated from the lower table 3.

A punch Tp which is an upper tool is mounted on the upper tool holder 2, and a die Td which is a lower tool is mounted on the lower tool holder 4. FIG. 1 shows a modular type in which the upper tool holder 2 is integrally attached over an entire length of a lower end of the upper table 1. However, alternatively an intermediate plate type may be adopted in which a plurality of intermediate plates for mounting the punch Tp are attached to the lower end of the upper table 1 in a longitudinal direction. The intermediate plates are also the upper tool holder.

Mounting the punch Tp on the upper table 1 means mounting the punch Tp on the upper tool holder 2 or the intermediate plates. Mounting the die Td on the lower table 3 means mounting the die Td on the lower tool holder 4. Two or more punches Tp may be mounted in line on the upper table 1, and two or more dies Td may be mounted in line on the lower table 3.

A back gauge 40 is arranged on a back side of the lower table 3. The back gauge 40 has abutments 42a and 42b which move in a horizontal direction along a back gauge carriage 41. Although FIG. 1 shows two abutments that are the abutments 42a and 42b, the number of abutments is not limited to two. The abutments 42a and 42b are configured to move in a height direction and in a front-back direction also.

Before an operator arranges a sheet metal W to be processed on the die Td and the sheet metal W is bent, the abutments 42a and 42b move to a position corresponding to the die Td. The operator arranges the sheet metal W on the die Td such that an end of the sheet metal W on a back side abuts the abutments 42a and 42b. That is, the abutments 42a and 42b act to determine a position of the sheet metal W in a front-back direction when the sheet metal W is arranged on the die Td.

An operation pendant 7 having a display 71 and an operation unit 72 with a plurality of operation buttons is attached on a left side of the press brake 100 in the horizontal direction via an arm 7a. The operation pendant 7 is connected to the NC device 10. The NC device 10 is connected to a foot switch 8 having a closing foot switch 81 for lowering the upper table 1 and an opening foot switch 82 for raising the upper table 1.

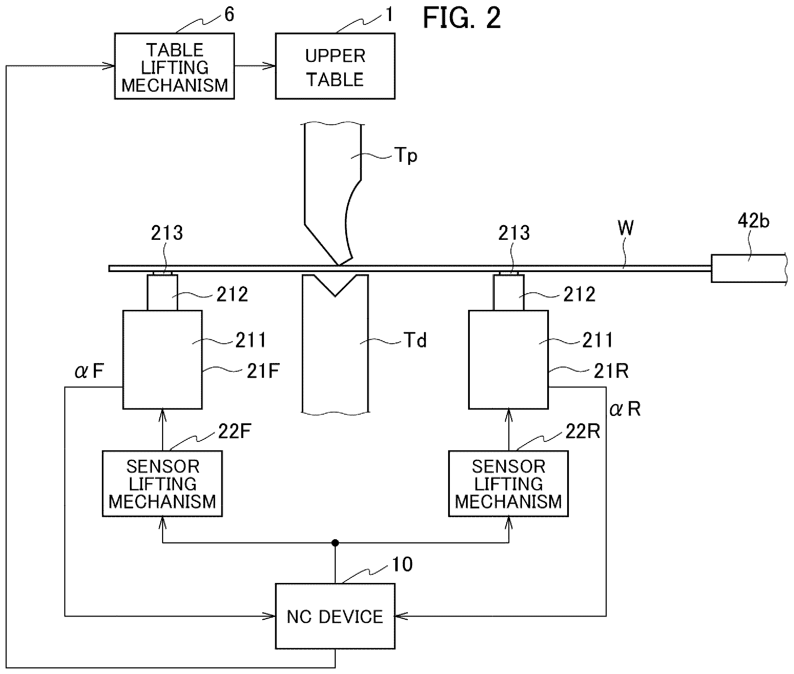

FIG. 2 shows configuration examples of angle sensors of the press brake 100. Although FIG. 1 does not show the angle sensors, as shown in FIG. 2, the press brake 100 includes angle sensors 21F and 21R for measuring an angle of the sheet metal W when the sheet metal W is bent. The angle sensor 21F is arranged on the front side of the die Td, and the angle sensor 21R is arranged on the rear side of the die Td. The angle sensors 21F and 21R are what is referred to as contact angle sensors. The angle sensors 21F and 21R are configured to be raised and lowered by sensor lifting mechanisms 22F and 22R, respectively. When it is necessary to measure an angle of the sheet metal W, the angle sensors 21F and 21R below the sheet metal W are moved upward by the sensor lifting mechanisms 22F and 22R according to the control by the NC device 10.

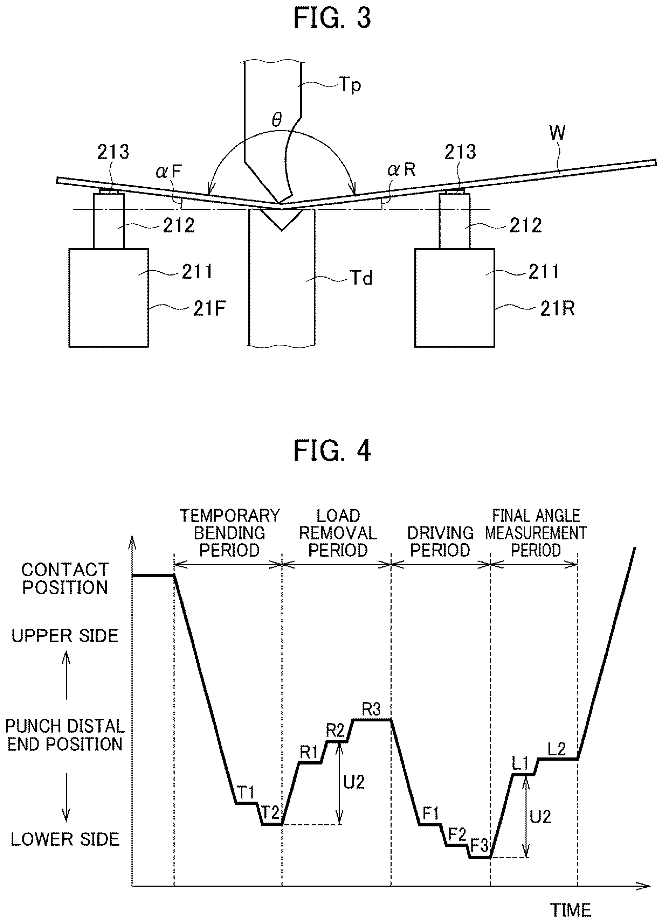

Each of the angle sensors 21F and 21R includes a main body 211 and a protrusion 212 which can be freely protruded from the main body 211. A slightly protruding distal end 213 is disposed on an upper end of the protrusion 212. As shown in FIG. 2, before processing to bend the sheet metal W starts, protrusion states of the protrusions 212 of the angle sensors 21F and 21R are minimum. FIG. 3 shows an angle of the sheet metal W detected by the angle sensors 21F and 21R. As shown in FIG. 3, when the punch Tp is lowered and the sheet metal W is bent, the protrusion 212 protrudes upward in accordance with the upward displacement of the sheet metal W.

As shown in FIG. 3, using a plane indicated by a dash-dot-dash line obtained by extending an upper end surface of the die Td as a reference plane, an angle of the sheet metal W measured by the angle sensor 21F is an angle αF formed between the reference plane and a portion of the sheet metal W on the front side of the punch Tp and the die Td. An angle of the sheet metal W measured by the angle sensor 21R is an angle αR formed between the reference plane and a portion of the sheet metal W on the rear side of the punch Tp and the die Td. As shown in FIG. 2, the angles αF and αR measured by the angle sensors 21F and 21R, respectively are input to the NC device 10. The NC device 10 calculates a bending angle θ of the sheet metal W shown in FIG. 3 based on a calculation formula 180 - αF - αR.

Angle sensors for measuring an angle of the sheet metal W are not limited to contact angle sensors, but may be laser angle sensors. When the laser angle sensors are used as the angle sensors, it is not necessary to dispose the sensor lifting mechanisms 22F and 22R, and the laser angle sensors on the front side and on the rear side are located at fixed positons in the height direction. The laser angle sensors on the front side and on the rear side have laser emitting units for irradiating portions of the sheet metal W on the front side and on the rear side of the punch Tp and the die Td with linear laser beams, and imaging units for imaging the linear laser beams used to irradiate the sheet metal W. The NC device 10 calculates the bending angle θ of the sheet metal W by calculating angles of the sheet metal W corresponding to the angles αF and αR based on angles of the linear laser beams in images imaged by the imaging units.

The NC device 10 of the press brake 100 configured as described above controls the press brake 100 such that the sheet metal W is bent by performing control operations of first to third examples according to a processing program.

FIG. 4 shows a first example of a control operation performed by the NC device 10. In FIGS. 4 to 6, a horizontal axis indicates time, and a vertical axis indicates a position of a distal end of the punch Tp in the height direction. In FIGS. 4 to 6, a graph between a position R3 and a position F3 is enlarged to facilitate understanding of a change in the position of the distal end of the punch Tp in the height direction. A distance between the position R3 and the position F3 is about 0.1 mm to 0.2 mm. Further, a distance between a contact position, which will be described later, and the position F3 is about 2 mm to 3 mm.

It is assumed that a target bending angle of the sheet metal W is 90 degrees, for example. The NC device 10 controls raising and lowering of the upper table 1 as shown in FIG. 4 such that the sheet metal W is bent to have a target bending angle of 90 degrees. When the NC device 10 starts lowering the upper table 1, the distal end of the punch Tp contacts the sheet metal W. The NC device 10 stops the upper table 1, while the distal end of the punch Tp is located at the contact position shown in FIG. 4, and separates the abutments 42a and 42b from the sheet metal W.

During a temporary bending period after the distal end of the punch Tp contacts the sheet metal W, the NC device 10 lowers a position of the distal end of the punch Tp to a position T1, the distal end temporarily stops at the positon T1, and then the NC device 10 further lowers the position of the distal end to a position T2. In FIG. 4, the upper table 1 (punch Tp) is lowered in two steps, but the number of lowering steps is not limited to two.

The position T2 during the temporary bending period is a position for bending the sheet metal W to have a predetermined temporary bending angle which is wider than the target bending angle of 90 degrees. The NC device 10 controls the table lifting mechanism 6 to lower the upper table 1 by a first depth value for bending the sheet metal W to have the temporary bending angle during the temporary bending period. The first depth value of the punch Tp for bending the sheet metal W to have the temporary bending angle after the distal end of the punch Tp contacts the sheet metal W is determined in advance based on a bending theory. The depth value is the lowering amount of the punch Tp, when the contact position where the distal end of the punch Tp contacts the sheet metal W is used as a reference. In other words, the depth value indicates a position of the distal end of the punch Tp in the height direction. Hereinafter, the depth value is abbreviated as a D value.

When a temporary bending operation ends, the NC device 10 calculates a first bending angle θ1 of the sheet metal W based on an angle of the sheet metal W measured by the angle sensors 21F and 21R. The NC device 10 holds the first bending angle θ1 when the temporary bending operation of the sheet metal W ends.

When the sheet metal W is bent to have the temporary bending angle, the NC device 10 switches a period of the press brake 100 to a load removal period. During the load removal period, the NC device 10 controls the upper table 1 to be raised in a plurality of steps in order to remove a load of the sheet metal W, while keeping a state in which the punch Tp is in contact with the sheet metal W. An expression "remove a load" means that a load applied to the sheet metal W is removed.

In FIG. 4, the NC device 10 raises the position of the distal end of the punch Tp to a position R1, the distal end temporarily stops at the position R1, and the NC device 10 calculates a bending angle of the sheet metal W based on an angle of the sheet metal W measured by the angle sensors 21F and 21R. Subsequently, the NC device 10 raises the position of the distal end of the punch Tp to a position R2, the distal end temporarily stops at the position R2, and the NC device 10 calculates a bending angle of the sheet metal W. At this time, if the difference between the bending angle at the position R1 and the bending angle at the position R2 is a threshold value or less, this means that load removal of the sheet metal W ends. FIG. 4 shows an example in which the load removal of the sheet metal W does not end at the position R2. Therefore, the NC device 10 raises the position of the distal end of the punch Tp to the position R3, the distal end temporarily stops at the position R3, and the NC device 10 calculates a bending angle of the sheet metal W. If the difference between the bending angle at the position R2 and the bending angle at the position R3 is the threshold value or less, this means that the load removal of the sheet metal W ends at the position R3.

The number of steps required to end the removal of the load applied to the sheet metal W differs depending on various conditions such as a distance between the position T2 and the position R1, and a distance between the position R1 and the position R2. FIG. 4 shows a coarse step in which the distance between the positions R1, R2, and R3 is relatively long. However, a fine step may be adopted in which a distance for raising the position of the distal end of the punch Tp at one time is finely set. In this case, the NC device 10 continuously repeats processing of raising the position of the distal end of the punch Tp by a fine distance and calculating a bending angle of the sheet metal W. If the fine distance is a constant distance, a bending angle of the sheet metal W at each time point is calculated, while the position of the distal end of the punch Tp raises substantially linearly, in detail, while the position raises strictly in the manner of fine steps.

While the load applied to the sheet metal W is removed during the load removal period, the NC device 10 calculates a second bending angle θ2 of the sheet metal W based on an angle of the sheet metal W measured by the angle sensors 21F and 21R. Even if the sheet metal W is bent to have the first bending angle θ1 during the temporary bending period, when the load applied to the sheet metal W is removed during the load removal period, the bending angle increases due to spring back. The second bending angle θ2 is a bending angle of the sheet metal W increased due to the spring back. The NC device 10 calculates the spring back amount by subtracting the first bending angle θ1 from the second bending angle θ2.

If it is possible to obtain the spring back amount based on the difference between the second bending angle θ2 and the first bending angle θ1 during the load removal period, the NC device 10 switches a period of the press brake 100 to a driving period. The NC device 10 calculates a second D value for bending the sheet metal W to have the target bending angle in consideration of the spring back amount. Simply, it is considered that if the spring back amount is 2 degrees, the NC device 10 sets the target bending angle to be 88 degrees, and lowers the upper table 1 by the lowering amount in which the sheet metal W can be bent to have the bending angle of 88 degrees, for example. However, since the spring back amount generally differs depending on a target bending angle, even if the spring back amount obtained during the load removal period is used without any changes and a target bending angle is set, the target bending angle may not be 90 degrees.

Therefore, it is preferable that the NC device 10 corrects the spring back amount obtained during the load removal period first, and then calculates the second D value for bending the sheet metal W to have a set target bending angle, instead of using the spring back amount obtained during the load removal period without any changes.

During the driving period, the NC device 10 divides the second D value into a plurality of values to control the table lifting mechanism 6 such that the upper table 1 is lowered by the second D value in a plurality of steps in order. In FIG. 4, the NC device 10 lowers the position of the distal end of the punch Tp from the position R3 to a position F1, the distal end temporarily stops at the position F1, and then the NC device 10 calculates a bending angle of the sheet metal W based on an angle of the sheet metal W. Subsequently, the NC device 10 lowers the position of the distal end of the punch Tp to a position F2 in consideration of the bending angle at the position F1, the distal end temporarily stops at the position F2, and the NC device 10 calculates a bending angle of the sheet metal W based on an angle of the sheet metal W. Further, the NC device 10 lowers the position of the distal end of the punch Tp, to the position F3 where a final bending angle of the sheet metal W becomes the target bending angle of 90 degrees, in consideration of the bending angle at the position F2.

In this case, a driving operation during the driving period has three steps, but alternatively the driving operation may have one step, two steps, or four or more steps. The number of steps of the driving operation is not limited.

When the sheet metal W is bent to have the target bending angle, the NC device 10 switches a period of the press brake 100 to a final angle measurement period. The NC device 10 removes the load applied to the sheet metal W, while keeping a state in which the punch Tp is in contact with the sheet metal W, and calculates a final bending angle of the sheet metal W based on an angle of the sheet metal W measured by the angle sensors 21F and 21R.

In FIG. 4, the NC device 10 raises the position of the distal end of the punch Tp to a position L1, the distal end temporarily stops at the position L1, and the NC device 10 calculates a bending angle of the sheet metal W. Subsequently, the NC device 10 raises the position of the distal end of the punch Tp to a position L2, the distal end temporarily stops at the position L2, and the NC device 10 calculates a bending angle of the sheet metal W. In the same manner as the load removal during the load removal period, if the difference between the bending angle at the position L2 and the bending angle at the position L1 is a threshold value or less, this means that the load removal of the sheet metal W ends. The difference between the bending angle at the position L2 and the bending angle at the position L1 is the threshold value or less, and the load removal of the sheet metal W ends at the position L2. While the load applied to the sheet metal W is removed, the NC device 10 calculates a final bending angle of the sheet metal W. Subsequently, the NC device 10 controls the table lifting mechanism 6 to raise the upper table 1.

In FIG. 4, the raising amount of the upper table 1, from the position T2 of the distal end of the punch Tp at the end of the temporary bending period, to the position R2 which is a middle step before the position R3 where the load removal of the sheet metal W ends, is defined as the raising amount U2. In the first example shown in FIG. 4, the raising amount U2 is set as the raising amount, from the position F3 of the distal end of the punch Tp at the end of the driving period, to the position L1, which is the first raising amount of the upper table 1 during the final angle measurement period.

In this way, in the first example, a final bending angle of the sheet metal W is calculated by the angle sensors 21F and 21R after the end of the driving period. Therefore, it is not necessary for the operator to measure a final bending angle by using a digital bending angle gauge. This can reduce the processing time from the start of bending of the sheet metal W to the confirmation of a bending angle after the end of bending. In addition, in the first example, the raising amount U2 in which the upper table 1 is raised for load removal up to the middle step before the load removal of the sheet metal W during the load removal period ends, is set to be the first raising amount of the upper table 1 during the final angle measurement period. Therefore, according to the first example, it is possible to reduce the time required for load removal during the final angle measurement period.

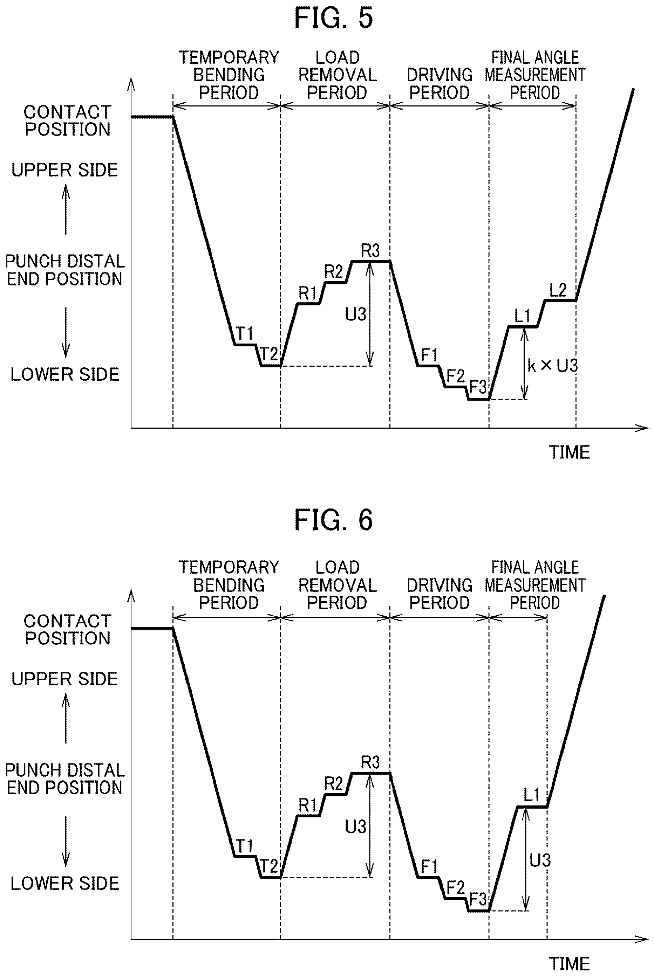

FIG. 5 shows a second example of a control operation performed by the NC device 10. In FIG. 5, the same parts as those in FIG. 4 are denoted with the same reference numerals, and the description thereof will be omitted. Similar to the first example, in the second example also, the upper table 1 is lowered in two steps during the temporary bending period, and lowered in three steps during the driving period. In the second example also, the load removal ends in three steps during the load removal period, the load removal ends in two steps during the final angle measurement period, and the upper table 1 is raised.

In FIG. 5, the raising amount of the upper table 1, from the position T2 of the distal end of the punch Tp at the end of the temporary bending period, to the position R3 where the load removal of the sheet metal W ends, is defined as the raising amount U3. In the second example shown in FIG. 5, the raising amount obtained by multiplying the raising amount U3 by a predetermined coefficient k which is less than one is set as the first raising amount of the upper table 1 during the final angle measurement period. During the final angle measurement period, when the load applied to the sheet metal W is removed, the NC device 10 calculates a final bending angle of the sheet metal W, and then controls the table lifting mechanism 6 to raise the upper table 1. According to the second example, it is possible to reduce the time required for load removal during the final angle measurement period.

FIG. 6 shows a third example of a control operation performed by the NC device 10. In FIG. 6, the same parts as those in FIG. 4 are denoted with the same reference numerals, and the description thereof will be omitted. Similar to the first and second examples, in the third example, the upper table 1 is lowered in two steps during the temporary bending period, and lowered in three steps during the driving period. In the third example, the load removal ends in three steps during the load removal period, the load removal of the sheet metal W ends in one step during the final angle measurement period, and the upper table 1 is raised.

In the third example shown in FIG. 6, the raising amount U3 of the upper table 1, from the position T2 of the distal end of the punch Tp at the end of the temporary bending period, to the position R3 where the load removal of the sheet metal W ends, is set as the raising amount in which the upper table 1 is raised to remove the load applied to the sheet metal W in one step during the final angle measurement period. During the final angle measurement period, when the load applied to the sheet metal W is removed, the NC device 10 calculates a final bending angle of the sheet metal W first, and then controls the table lifting mechanism 6 to raise the upper table 1. According to the third example, it is possible to reduce the time required for load removal during the final angle measurement period.

As shown in the first to third examples described above, in the press brake 100, the raising amount of the upper table 1 up to the middle step before the load removal of the sheet metal W during the load removal period ends, or the raising amount of the upper table 1 up to the end of the load removal of the sheet metal W, is reflected in the raising amount of the upper table 1 during the final angle measurement period. This can reduce the time required for load removal during the final angle measurement period. Therefore, it is possible to reduce the processing time from the start of bending of the sheet metal W to the confirmation of a bending angle after the end of bending.

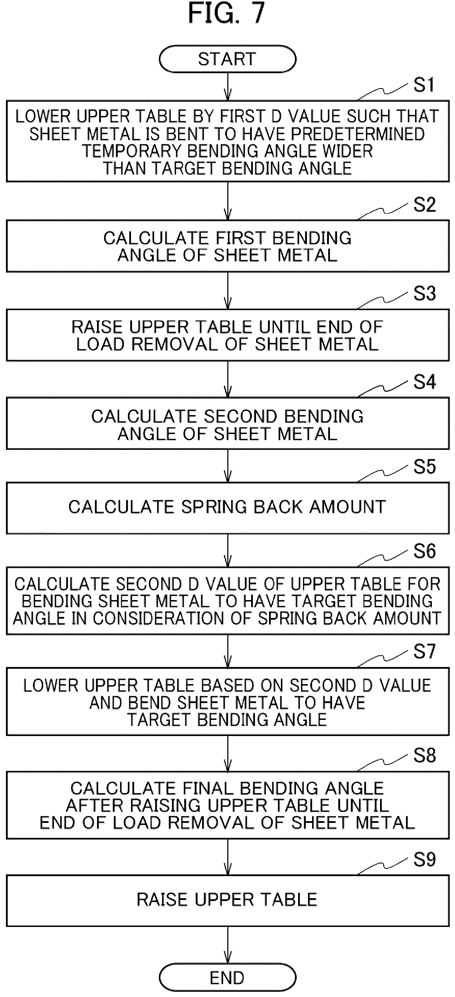

With reference to a flowchart shown in FIG. 7, a description will be given regarding an operation performed by the press brake 100 and a press brake control method performed by the press brake 100. In FIG. 7, after the start of bending processing, in step S1, the NC device 10 controls the table lifting mechanism 6 to lower the upper table 1 by the first D value such that the sheet metal W is bent to have to the predetermined temporary bending angle which is wider than the target bending angle. In step S2, the NC device 10 calculates the first bending angle θ1 of the sheet metal W.

In step S3, the NC device 10 controls the table lifting mechanism 6 to raise the upper table 1 until the end of the load removal of the sheet metal W. In step S4, the NC device 10 calculates the second bending angle θ2 of the sheet metal W. In step S5, the NC device 10 calculates the spring back amount based on the difference between the second bending angle θ2 and the first bending angle θ1.

In step S6, the NC device 10 calculates the second D value of the upper table 1 for bending the sheet metal W to have the target bending angle in consideration of the spring back amount. In step S7, the NC device 10 lowers the upper table 1 based on the second D value in one or more steps, and controls the table lifting mechanism 6 to bend the sheet metal W to have the target bending angle. In step S8, the NC device 10 calculates a final bending angle of the sheet metal W after raising the upper table 1 until the end of the load removal of the sheet metal W. In step S9, the NC device 10 raises the upper table 1 and ends the bending processing.

The above processing shown in FIG. 7 is performed for each sheet metal W, when a plurality of sheet metals W are bent in order. Therefore, when each sheet metal W is bent, the operator can confirm whether each sheet metal W is actually bent to have the target bending angle.

The present invention is not limited to one or more embodiments described above, and various modifications are possible within a scope not departing from a scope of the present invention. In one or more embodiments described above, the upper table 1 is a slide table which can be raised and lowered, and the lower table 3 is a fixed table of which a position is fixed. However, alternatively the upper table 1 may be the fixed table and the lower table 3 may be the slide table. In this case, the table lifting mechanism 6 raises and lowers the lower table 3. The raising and lowering of the upper table 1 can be read as the lowering and raising of the lower table 3, respectively, and the first lowering amount and the second lowering amount of the upper table 1 are read as the first raising amount and the second raising amount of the lower table 3.

In one or more embodiments, the D value is the lowering amount of the punch Tp when, the contact position where the distal end of the punch Tp contacts the sheet metal W, is used as a reference. However, alternatively the D value may be a distance between a distal end of the die Td and the distal end of the punch Tp, when a position of the distal end of the die Td is used as a reference. In this case also, the D value indicates a position of the distal end of the punch Tp in the height direction.

The present application claims priority based on Japanese Patent Application No. 2022-169329, filed with the Japan Patent Office on October 21, 2022.

## Claims

1. A press brake (100) comprising:
an upper table (1) on which a punch (Tp) is mounted;
a lower table (3) on which a die (Td) is mounted;
a table lifting mechanism (6L, 6R) configured to raise and lower the upper table (1) or the lower table (3);
an angle sensor (21F, 21R) configured to measure an angle of a sheet metal (W), when the table lifting mechanism (6L, 6R) raises and lowers the upper table (1) or the lower table (3) and bends the sheet metal (W), while the sheet metal (W) is interposed between the punch (Tp) and the die (Td); and
a control device (10) configured to calculate a bending angle of the sheet metal (W) based on an angle of the sheet metal (W) measured by the angle sensor (21F, 21R) and configured to control the table lifting mechanism (6L, 6R) to lower the upper table (1) or to raise the lower table (3), wherein
when the control device (10) controls the table lifting mechanism (6L, 6R) to lower the upper table (1) or to raise the lower table (3) to bend the sheet metal (W) to have a target bending angle,
the control device (10) controls the table lifting mechanism (6L, 6R) to lower the upper table (1) by a first depth value or to raise the lower table (3) by the first depth value such that the sheet metal (W) is bent to have a predetermined temporary bending angle that is wider than the target bending angle during a temporary bending period,
the control device (10) calculates a first bending angle of the sheet metal (W) bent to have the temporary bending angle based on the angle of the sheet metal (W) measured by the angle sensor (21F, 21R),
the control device (10), during a load removal period after the sheet metal (W) is bent to have the temporary bending angle, controls the table lifting mechanism (6L, 6R) to raise the upper table (1) or to lower the lower table (3) to remove a load applied to the sheet metal (W), while keeping a state in which the punch (Tp) is in contact with the sheet metal (W),
the control device (10), while the load applied to the sheet metal (W) is removed during the load removal period, calculates a second bending angle of the sheet metal (W) based on the angle of the sheet metal (W) measured by the angle sensor (21F, 21R) and calculates a spring back amount based on a difference between the second bending angle and the first bending angle,
the control device (10) calculates a second depth value for bending the sheet metal (W) to have the target bending angle in consideration of the spring back amount during a driving period and controls the table lifting mechanism (6L, 6R) to lower the upper table (1) by the second depth value or to raise the lower table (3) by the second depth value, and
the control device (10), during a final angle measurement period after the sheet metal (W) is bent to have the target bending angle, removes the load applied to the sheet metal (W), while keeping the state in which the punch (Tp) is in contact with the sheet metal (W), controls the table lifting mechanism (6L, 6R) to raise the upper table (1) or to lower the lower table (3), and calculates a final bending angle of the sheet metal (W) based on the angle of the sheet metal (W) measured by the angle sensor (21F, 21R), **characterized in that:**
the control device (10) sets a raising amount in which the upper table (1) is raised or a lowering amount in which the lower table (3) is lowered for removal of the load applied to the sheet metal (W) during the final angle measurement period, based on a raising amount in which the upper table (1) is raised or a lowering amount in which the lower table (3) is lowered for the removal of the load applied to the sheet metal (W) up to a middle step before the removal of the load during the load removal period ends, or a raising amount in which the upper table (1) is raised or a lowering amount in which the lower table (3) is lowered until the removal of the load applied to the sheet metal (W) ends.

2. The press brake (100) according to claim 1, wherein
the control device (10) sets the raising amount in which the upper table (1) is raised or the lowering amount in which the lower table (3) is lowered for the removal of the load applied to the sheet metal (W) up to the middle step before the removal of the load during the load removal period ends, as a first raising amount in which the upper table (1) is raised or a first lowering amount in which the lower table (3) is lowered for the removal of the load applied to the sheet metal (W) during the final angle measurement period.

3. The press brake (100) according to claim 1, wherein
the control device (10) sets a raising amount obtained by multiplying the raising amount in which the upper table (1) is raised by a predetermined coefficient that is less than one or a lowering amount obtained by multiplying the lowering amount in which the lower table (3) is lowered by a predetermined coefficient that is less than one until the removal of the load applied to the sheet metal (W) during the load removal period ends, as a first raising amount in which the upper table (1) is raised or a first lowering amount in which the lower table (3) is lowered for the removal of the load applied to the sheet metal (W) during the final angle measurement period.

4. The press brake (100) according to claim 1, wherein
the control device (10) sets the raising amount in which the upper table (1) is raised or the lowering amount in which the lower table (3) is lowered until the removal of the load applied to the sheet metal (W) during the load removal period ends, as a raising amount in which the upper table (1) is raised or a lowering amount in which the lower table (3) is lowered for the removal of the load applied to the sheet metal (W) in one step during the final angle measurement period.

5. A press brake control method performed by a control device (10) configured to control a press brake (100) including: an upper table (1) on which a punch (Tp) is mounted; a lower table (3) on which a die (Td) is mounted; a table lifting mechanism (6L, 6R) configured to raise and lower the upper table (1) or the lower table (3); and an angle sensor (21F, 21R) configured to measure an angle of a sheet metal (W) that is interposed between the punch (Tp) and the die (Td) and is bent, the press brake control method comprising:
controlling the table lifting mechanism (6L, 6R) to lower the upper table (1) by a first depth value or to raise the lower table (3) by the first depth value such that the sheet metal (W) is bent to have a predetermined temporary bending angle that is wider than a target bending angle during a temporary bending period;
calculating a first bending angle of the sheet metal (W) bent to have the temporary bending angle based on an angle of the sheet metal (W) measured by the angle sensor (21F, 21R);
during a load removal period after the sheet metal (W) is bent to have the temporary bending angle, controlling the table lifting mechanism (6L, 6R) to raise the upper table (1) or to lower the lower table (3) to remove a load applied to the sheet metal (W), while keeping a state in which the punch (Tp) is in contact with the sheet metal (W);
while the load applied to the sheet metal (W) is removed during the load removal period, calculating a second bending angle of the sheet metal (W) based on the angle of the sheet metal (W) measured by the angle sensor (21F, 21R) and calculating a spring back amount based on a difference between the second bending angle and the first bending angle;
calculating a second depth value for bending the sheet metal (W) to have the target bending angle in consideration of the spring back amount during a driving period and controlling the table lifting mechanism (6L, 6R) to lower the upper table (1) by the second depth value or to raise the lower table (3) by the second depth value; and
during a final angle measurement period after the sheet metal (W) is bent to have the target bending angle, removing the load applied to the sheet metal (W), while keeping the state in which the punch (Tp) is in contact with the sheet metal (W), controlling the table lifting mechanism (6L, 6R) to raise the upper table (1) or to lower the lower table (3), and calculating a final bending angle of the sheet metal (W) based on the angle of the sheet metal (W) measured by the angle sensor (21F, 21R), **characterized in that:**
the control device (10) sets a raising amount in which the upper table (1) is raised or a lowering amount in which the lower table (3) is lowered for removal of the load applied to the sheet metal (W) during the final angle measurement period, based on a raising amount in which the upper table (1) is raised or a lowering amount in which the lower table (3) is lowered for the removal of the load applied to the sheet metal (W) up to a middle step before the removal of the load during the load removal period ends, or a raising amount in which the upper table (1) is raised or a lowering amount in which the lower table (3) is lowered until the removal of the load applied to the sheet metal (W) ends.

6. The press brake control method according to claim 5, wherein
the control device (10) sets the raising amount in which the upper table (1) is raised or the lowering amount in which the lower table (3) is lowered for the removal of the load applied to the sheet metal (W) up to the middle step before the removal of the load during the load removal period ends, as a first raising amount in which the upper table (1) is raised or a first lowering amount in which the lower table (3) is lowered for the removal of the load applied to the sheet metal (W) during the final angle measurement period.

7. The press brake control method according to claim 5, wherein
the control device (10) sets a raising amount obtained by multiplying the raising amount in which the upper table (1) is raised by a predetermined coefficient that is less than one or a lowering amount obtained by multiplying the lowering amount in which the lower table (3) is lowered by a predetermined coefficient that is less than one until the removal of the load applied to the sheet metal (W) during the load removal period ends, as a first raising amount in which the upper table (1) is raised or a first lowering amount in which the lower table (3) is lowered for the removal of the load applied to the sheet metal (W) during the final angle measurement period.

8. The press brake control method according to claim 5, wherein
the control device (10) sets the raising amount in which the upper table (1) is raised or the lowering amount in which the lower table (3) is lowered until the removal of the load applied to the sheet metal (W) during the load removal period ends, as a raising amount in which the upper table (1) is raised or a lowering amount in which the lower table (3) is lowered for the removal of the load applied to the sheet metal (W) in one step during the final angle measurement period.

## Patentansprüche

1. Eine Abkantpresse (100), umfassend:
einen Obertisch (1), auf dem ein Stempel (Tp) angebracht ist;
einen Untertisch (3), auf dem eine Matrize (Td) angebracht ist;
einen Tischhubmechanismus (6L, 6R), der konfiguriert ist, dass er den Obertisch (1) oder den Untertisch (3) anhebt und absenkt;
einen Winkelsensor (21F, 21R), der konfiguriert ist, einen Winkel eines Blechs (W) zu messen, wenn der Tischhubmechanismus (6L, 6R) den Obertisch (1) oder den Untertisch (3) anhebt und absenkt und das Blech (W) biegt, während das Blech (W) zwischen dem Stempel (Tp) und der Matrize (Td) angeordnet ist; und
eine Steuervorrichtung (10), die konfiguriert ist, einen Biegewinkel des Blechs (W) auf der Grundlage eines vom Winkelsensor (21F, 21R) gemessenen Winkels des Blechs (W) zu berechnen, und die konfiguriert ist, den Tischhubmechanismus (6L, 6R) so zu steuern, dass der Obertisch (1) abgesenkt oder der Untertisch (3) angehoben wird, wobei
wenn die Steuervorrichtung (10) den Tischhubmechanismus (6L, 6R) so steuert, dass der Obertisch (1) abgesenkt oder der Untertisch (3) angehoben wird, um das Blech (W) auf einen Soll-Biegewinkel zu biegen,
die Steuervorrichtung (10) den Tischhubmechanismus (6L, 6R) so steuert, dass der Obertisch (1) um einen ersten Tiefenwert abgesenkt oder der Untertisch (3) um den ersten Tiefenwert angehoben wird, sodass das Blech (W) während einer vorübergehenden Biegephase auf einen vorbestimmten vorübergehenden Biegewinkel gebogen wird, der größer ist als der Soll-Biegewinkel,
die Steuervorrichtung (10) einen ersten Biegewinkel des auf den vorübergehenden Biegewinkel gebogenen Blechs (W) auf der Grundlage des vom Winkelsensor (21F, 21R) gemessenen Winkels des Blechs (W) berechnet,
die Steuervorrichtung (10) während einer Entlastungsphase, nachdem das Blech (W) auf den vorübergehenden Biegewinkel gebogen wurde, den Tischhubmechanismus (6L, 6R) so steuert, dass der Obertisch (1) angehoben oder der Untertisch (3) abgesenkt wird, um eine auf das Blech (W) ausgeübte Last zu entfernen, wobei ein Zustand aufrechterhalten wird, in dem der Stempel (Tp) mit dem Blech (W) in Kontakt steht,
die Steuervorrichtung (10), während die auf das Blech (W) ausgeübte Last während der Entlastungsphase entfernt wird, einen zweiten Biegewinkel des Blechs (W) auf der Grundlage des vom Winkelsensor (21F, 21R) gemessenen Winkels des Blechs (W) berechnet und einen Rückfederungsbetrag auf der Grundlage einer Differenz zwischen dem zweiten Biegewinkel und dem ersten Biegewinkel berechnet,
die Steuervorrichtung (10) einen zweiten Tiefenwert zum Biegen des Blechs (W) auf den Soll-Biegewinkel unter Berücksichtigung des Rückfederungsbetrags während einer Antriebsphase berechnet und den Tischhubmechanismus (6L, 6R) so steuert, dass der Obertisch (1) um den zweiten Tiefenwert abgesenkt oder der Untertisch (3) um den zweiten Tiefenwert angehoben wird, und
die Steuervorrichtung (10) während einer Endwinkelmessphase, nachdem das Blech (W) auf den Soll-Biegewinkel gebogen wurde, die auf das Blech (W) ausgeübte Last entfernt, während sie den Zustand aufrechterhält, in dem der Stempel (Tp) mit dem Blech (W) in Kontakt steht, den Tischhubmechanismus (6L, 6R) so steuert, dass der Obertisch (1) angehoben oder der Untertisch (3) abgesenkt wird, und einen endgültigen Biegewinkel des Blechs (W) auf der Grundlage des vom Winkelsensor (21F, 21R) gemessenen Winkels des Blechs (W) berechnet, **dadurch gekennzeichnet, dass:**
die Steuervorrichtung (10) einen Hubwert, um den der Obertisch (1) angehoben wird, oder einen Absenkwert, um den der Untertisch (3) abgesenkt wird, zum Entfernen der auf das Blech (W) ausgeübten Last während der Endwinkelmessphase festlegt, basierend auf einem Hubwert, um den der Obertisch (1) angehoben wird, oder einem Absenkwert, um den der Untertisch (3) abgesenkt wird, um die auf das Blech (W) wirkende Last bis zu einem mittleren Schritt vor dem Ende der Lastentfernung während der Entlastungsphase zu beseitigen, oder auf der Grundlage eines Hubwerts, um den der Obertisch (1) angehoben wird, oder eines Absenkwerts, um den der Untertisch (3) abgesenkt wird, bis die Beseitigung der auf das Blech (W) wirkenden Last beendet ist.

2. Die Abkantpresse (100) gemäß Anspruch 1, wobei
die Steuervorrichtung (10) den Hubwert, um den der Obertisch (1) angehoben wird, oder den Absenkwert, um den der Untertisch (3) abgesenkt wird, zum Entfernen der auf das Blech (W) ausgeübten Last bis zu dem mittleren Schritt vor dem Ende der Lastentfernung während der Entlastungsphase als einen ersten Hubwert, um den der Obertisch (1) angehoben wird, oder als einen ersten Absenkwert, um den der Untertisch (3) abgesenkt wird, um die auf das Blech (W) ausgeübte Last während der Endwinkelmessphase zu beseitigen.

3. Die Abkantpresse (100) gemäß Anspruch 1, wobei
die Steuervorrichtung (10) einen Hubwert festlegt, der durch Multiplikation des Hubwerts, um den der Obertisch (1) angehoben wird, mit einem vorbestimmten Koeffizienten, der kleiner als eins ist, erhalten wird, oder einen Absenkwert, der durch Multiplikation des Absenkwerts, um den der Untertisch (3) abgesenkt wird, mit einem vorgegebenen Koeffizienten, der kleiner als eins ist, bis das Entfernen der auf das Blech (W) während der Entlastungsphase ausgeübten Last beendet ist, als ersten Hubwert, um den der Obertisch (1) angehoben wird, oder als ersten Absenkwert, um den der Untertisch (3) abgesenkt wird, um die auf das Blech (W) während der Endwinkelmessphase ausgeübte Last zu beseitigen.

4. Die Abkantpresse (100) gemäß Anspruch 1, wobei
die Steuervorrichtung (10) den Hubwert, um den der Obertisch (1) angehoben wird, oder den Absenkwert, um den der Untertisch (3) abgesenkt wird, bis zum Ende der Entlastungsphase, in der die auf das Blech (W) ausgeübte Last entfernt wird, als Hub, um den der Obertisch (1) angehoben wird, oder als Absenkwert, um den der Untertisch (3) abgesenkt wird, um die auf das Blech (W) ausgeübte Last während der Endwinkelmessphase in einem Schritt zu entfernen.

5. Ein Abkantpressensteuerungsverfahren, das von einer Steuervorrichtung (10) ausgeführt wird, die zur Steuerung einer Abkantpresse (100) konfiguriert ist, mit: einem Oberbett (1), auf dem ein Stempel (Tp) angebracht ist; einen Untertisch (3), auf dem eine Matrize (Td) angebracht ist; einen Tischhubmechanismus (6L, 6R), der konfiguriert ist, den Obertisch (1) oder den Untertisch (3) anzuheben und abzusenken; sowie einen Winkelsensor (21F, 21R), der konfiguriert ist, einen Winkel eines Blechs (W) zu messen, das zwischen dem Stempel (Tp) und der Matrize (Td) angeordnet ist und gebogen wird, wobei das Abkantpressensteuerungsverfahren umfasst:
Steuerung des Tischhubmechanismus (6L, 6R), um den Obertisch (1) um einen ersten Tiefenwert abzusenken oder den Untertisch (3) um den ersten Tiefenwert anzuheben, so dass das Blech (W) während einer vorübergehenden Biegephase auf einen vorbestimmten vorübergehenden Biegewinkel gebogen wird, der größer ist als ein Soll-Biegewinkel;
Berechnen eines ersten Biegewinkels des Blechs (W), das auf den vorübergehenden Biegewinkel gebogen wurde, auf der Grundlage eines vom Winkelsensor (21F, 21R) gemessenen Winkels des Blechs (W);
während einer Entlastungsphase, nachdem das Blech (W) auf den vorübergehenden Biegewinkel gebogen wurde, der Tischhubmechanismus (6L, 6R) so gesteuert wird, dass der Obertisch (1) angehoben oder der Untertisch (3) abgesenkt wird, um eine auf das Blech (W) ausgeübte Last zu entfernen, während der Zustand beibehalten wird, in dem der Stempel (Tp) mit dem Blech (W) in Kontakt steht;
während die auf das Blech (W) ausgeübte Last während der Entlastungsphase entfernt wird, Berechnen eines zweiten Biegewinkels des Blechs (W) auf der Grundlage des vom Winkelsensor (21F, 21R) gemessenen Winkels des Blechs (W) und Berechnen eines Rückfederungsbetrags auf der Grundlage einer Differenz zwischen dem zweiten Biegewinkel und dem ersten Biegewinkel;
Berechnung eines zweiten Tiefenwerts zum Biegen des Blechs (W) auf den Soll-Biegewinkel unter Berücksichtigung des Rückfederungsbetrags während einer Antriebsphase und Steuerung des Tischhubmechanismus (6L, 6R), um den Obertisch (1) um den zweiten Tiefenwert abzusenken oder den Untertisch (3) um den zweiten Tiefenwert anzuheben; und
während einer Endwinkelmessphase, nachdem das Blech (W) auf den Soll-Biegewinkel gebogen wurde, Entfernen der auf das Blech (W) ausgeübten Last unter Beibehaltung des Zustands, in dem der Stempel (Tp) mit dem Blech (W) in Kontakt steht, und Steuern des Tischhubmechanismus (6L, 6R), um den Obertisch (1) anzuheben oder den Untertisch (3) abzusenken, und Berechnen eines endgültigen Biegewinkels des Blechs (W) auf der Grundlage des vom Winkelsensor (21F, 21R) gemessenen Winkels des Blechs (W), **dadurch gekennzeichnet, dass:**
die Steuervorrichtung (10) einen Hubwert, um den der Obertisch (1) angehoben wird, oder einen Absenkwert, um den der Untertisch (3) abgesenkt wird, zum Entfernen der auf das Blech (W) ausgeübten Last während der Endwinkelmessphase festlegt, basierend auf einem Hubwert, um den der Obertisch (1) angehoben wird, oder einem Absenkwert, um den der Untertisch (3) abgesenkt wird, um die auf das Blech (W) wirkende Last bis zu einem mittleren Schritt vor dem Ende der Lastentfernung während der Entlastungsphase zu entfernen, oder auf der Grundlage eines Hubwerts, um den der Obertisch (1) angehoben wird, oder eines Absenkwerts, um den der Untertisch (3) abgesenkt wird, bis die Beseitigung der auf das Blech (W) wirkenden Last beendet ist.

6. Das Abkantpressensteuerungsverfahren gemäß Anspruch 5, wobei
die Steuervorrichtung (10) den Hubwert, um den der Obertisch (1) angehoben wird, oder den Absenkwert, um den der Untertisch (3) abgesenkt wird, zum Entfernen der auf das Blech (W) ausgeübten Last bis zu dem mittleren Schritt vor dem Ende der Lastentfernung während der Entlastungsphase als einen ersten Hubwert festlegt, um den der Obertisch (1) angehoben wird, oder als einen ersten Absenkwert festlegt, um den der Untertisch (3) abgesenkt wird einstellt, um die auf das Blech (W) ausgeübte Last während der Endwinkelmessphase zu entfernen.

7. Das Abkantpressensteuerungsverfahren gemäß Anspruch 5, wobei
die Steuervorrichtung (10) einen Hubwert, der durch Multiplikation des Hubwerts, um den der Obertisch (1) angehoben wird, mit einem vorbestimmten Koeffizienten, der kleiner als eins ist, erhalten wird, oder einen Absenkwert, der durch Multiplikation des Absenkwerts, um den der Untertisch (3) abgesenkt wird, mit einem vorgegebenen Koeffizienten, der kleiner als eins ist, bis das Entfernen der auf das Blech (W) während der Lastentlastungsphase ausgeübten Last beendet ist, als ersten Hubwert festlegt, um den der Obertisch (1) angehoben wird, oder als ersten Absenkwert festlegt, um den der Untertisch (3) abgesenkt wird, um die auf das Blech (W) während der Endwinkelmessphase ausgeübte Last zu entfernen.

8. Das Abkantpressensteuerungsverfahren gemäß Anspruch 5, wobei
die Steuervorrichtung (10) den Hubwert, um den der Obertisch (1) angehoben wird, oder den Absenkwert, um den der Untertisch (3) abgesenkt wird, bis zum Ende der Lastentfernung des auf das Blech (W) während der Lastentfernungsphase ausgeübten Lasts als einen Hubwert festlegt, um den der Obertisch (1) angehoben wird, oder als einen Absenkwert festlegt, um den der Untertisch (3) abgesenkt wird, um die auf das Blech (W) ausgeübte Last während der Endwinkelmessphase in einem Schritt zu beseitigen.

## Revendications

1. Presse plieuse (100) comprenant :
une table supérieure (1) sur laquelle est monté un poinçon (Tp) ;
une table inférieure (3) sur laquelle est montée une matrice (Td) ;
un mécanisme de levage de table (6L, 6R) configuré pour lever et abaisser la table supérieure (1) ou la table inférieure (3) ;
un capteur d'angle (21F, 21R) configuré pour mesurer un angle d'une tôle (W) quand le mécanisme de levage de table (6L, 6R) lève et abaisse la table supérieure (1) ou la table inférieure (3) et plie la tôle (W), alors que la tôle (W) est interposée entre le poinçon (Tp) et la matrice (Td) ; et
un dispositif de contrôle (10) configuré pour calculer un angle de pliage de la tôle (W) sur la base d'un angle de la tôle (W) mesuré par le capteur d'angle (21F, 21R) et configuré pour contrôler le mécanisme de levage de table (6L, 6R) pour abaisser la table supérieure (1) ou pour lever la table inférieure (3), dans laquelle
quand le dispositif de contrôle (10) contrôle le mécanisme de levage de table (6L, 6R) pour abaisser la table supérieure (1) ou pour lever la table inférieure (3) afin de plier la tôle (W) de manière à obtenir un angle de pliage cible,
le dispositif de contrôle (10) contrôle le mécanisme de levage de table (6L, 6R) pour abaisser la table supérieure (1) d'une première valeur de profondeur ou pour lever la table inférieure (3) de la première valeur de profondeur de sorte que la tôle (W) soit pliée selon un angle de pliage temporaire prédéterminé qui est supérieur à l'angle de pliage cible durant une période de pliage temporaire,
le dispositif de contrôle (10) calcule un premier angle de pliage de la tôle (W) pliée selon l'angle de pliage temporaire sur la base de l'angle de la tôle (W) mesuré par le capteur d'angle (21F, 21R),
le dispositif de contrôle (10), durant une période de suppression de charge après que la tôle (W) a été pliée selon l'angle de pliage temporaire, contrôle le mécanisme de levage de table (6L, 6R) pour lever la table supérieure (1) ou pour abaisser la table inférieure (3) afin de supprimer une charge appliquée à la tôle (W), tout en maintenant un état dans lequel le poinçon (Tp) est en contact avec la tôle (W),
le dispositif de contrôle (10), alors que la charge appliquée à la tôle (W) est supprimée durant la période de suppression de charge, calcule un deuxième angle de pliage de la tôle (W) sur la base de l'angle de la tôle (W) mesuré par le capteur d'angle (21F, 21R) et calcule une quantité de retour élastique sur la base de la différence entre le deuxième angle de pliage et le premier angle de pliage,
le dispositif de contrôle (10) calcule une deuxième valeur de profondeur pour le pliage de la tôle (W) selon l'angle de pliage cible en prenant en compte la quantité de retour élastique durant une période d'actionnement et contrôle le mécanisme de levage de table (6L, 6R) pour abaisser la table supérieure (1) de la deuxième valeur de profondeur ou pour lever la table inférieure (3) de la deuxième valeur de profondeur, et
le dispositif de contrôle (10), durant une période de mesure de l'angle final après que la tôle (W) a été pliée selon l'angle de pliage cible, supprime la charge appliquée à la tôle (W), tout en maintenant l'état dans lequel le poinçon (Tp) est en contact avec la tôle (W), contrôle le mécanisme de levage de table (6L, 6R) pour lever la table supérieure (1) ou pour abaisser la table inférieure (3), et calcule un angle de pliage final de la tôle (W) sur la base de l'angle de la tôle (W) mesuré par le capteur d'angle (21F, 21R),
**caractérisée en ce que** :
le dispositif de contrôle (10) règle une quantité de levage de la table supérieure (1) ou une quantité d'abaissement de la table inférieure (3) pour la suppression de la charge appliquée à la tôle (W) durant la période de mesure de l'angle final, sur la base d'une quantité de levage de la table supérieure (1) ou d'une quantité d'abaissement de la table inférieure (3) pour la suppression de la charge appliquée à la tôle (W) jusqu'à une étape intermédiaire avant la fin de la suppression de la charge durant la période de suppression de charge, ou une quantité de levage de la table supérieure (1) ou une quantité d'abaissement de la table inférieure (3), jusqu'à la fin de la suppression de la charge appliquée à la tôle (W).

2. Presse plieuse (100) selon la revendication 1, dans laquelle
le dispositif de contrôle (10) règle la quantité de levage de la table supérieure (1) ou la quantité d'abaissement de la table inférieure (3) pour la suppression de la charge appliquée à la tôle (W) jusqu'à l'étape intermédiaire avant la fin de la suppression de la charge durant la période de suppression de charge, comme une première quantité de levage de la table supérieure (1) ou une première quantité d'abaissement de la table inférieure (3) pour la suppression de la charge appliquée à la tôle (W) durant la période de mesure de l'angle final.

3. Presse plieuse (100) selon la revendication 1, dans laquelle
le dispositif de contrôle (10) règle une quantité de levage obtenue en multipliant la quantité de levage de la table supérieure (1) par un coefficient prédéterminé inférieur à un ou une quantité d'abaissement obtenue en multipliant la quantité d'abaissement de la table inférieure (3) par un coefficient prédéterminé inférieur à un, jusqu'à la fin de la suppression de la charge appliquée à la tôle (W) durant la période de suppression de charge, comme une première quantité de levage de la table supérieure (1) ou une première quantité d'abaissement de la table inférieure (3) pour la suppression de la charge appliquée à la tôle (W) durant la période de mesure de l'angle final.

4. Presse plieuse (100) selon la revendication 1, dans laquelle
le dispositif de contrôle (10) règle la quantité de levage de la table supérieure (1) ou la quantité d'abaissement de la table inférieure (3), jusqu'à la fin de la suppression de la charge appliquée à la tôle (W) durant la période de suppression de charge, comme une quantité de levage de la table supérieure (1) ou une quantité d'abaissement de la table inférieure (3) pour la suppression de la charge appliquée à la tôle (W) en une seule étape durant la période de mesure de l'angle final.

5. Procédé de contrôle d'une presse plieuse mis en œuvre par un dispositif de contrôle (10) configuré pour contrôler une presse plieuse (100) incluant : une table supérieure (1) sur laquelle est monté un poinçon (Tp) ; une table inférieure (3) sur laquelle est montée une matrice (Td) ; un mécanisme de levage de table (6L, 6R) configuré pour lever et abaisser la table supérieure (1) ou la table inférieure (3) ; et un capteur d'angle (21F, 21R) configuré pour mesurer un angle d'une tôle (W) interposée entre le poinçon (Tp) et la matrice (Td) et qui est pliée, le procédé de contrôle d'une presse plieuse comprenant :
le contrôle du mécanisme de levage de table (6L, 6R) pour abaisser la table supérieure (1) d'une première valeur de profondeur ou pour lever la table inférieure (3) de la première valeur de profondeur de sorte que la tôle (W) soit pliée selon un angle de pliage temporaire prédéterminé qui est supérieur à un angle de pliage cible durant une période de pliage temporaire ;
le calcul d'un premier angle de pliage de la tôle (W) pliée selon l'angle de pliage temporaire sur la base d'un angle de la tôle (W) mesuré par le capteur d'angle (21F, 21R) ;
durant une période de suppression de charge après que la tôle (W) a été pliée selon l'angle de pliage temporaire, le contrôle du mécanisme de levage de table (6L, 6R) pour lever la table supérieure (1) ou pour abaisser la table inférieure (3) afin de supprimer une charge appliquée à la tôle (W), tout en maintenant un état dans lequel le poinçon (Tp) est en contact avec la tôle (W) ;
alors que la charge appliquée à la tôle (W) est supprimée durant la période de suppression de charge, le calcul d'un deuxième angle de pliage de la tôle (W) sur la base de l'angle de la tôle (W) mesuré par le capteur d'angle (21F, 21R) et le calcul d'une quantité de retour élastique sur la base d'une différence entre le deuxième angle de pliage et le premier angle de pliage ;
le calcul d'une deuxième valeur de profondeur pour plier la tôle (W) selon l'angle de pliage cible en prenant en compte la quantité de retour élastique durant une période d'actionnement et le contrôle du mécanisme de levage de table (6L, 6R) pour abaisser la table supérieure (1) de la deuxième valeur de profondeur ou pour lever la table inférieure (3) de la deuxième valeur de profondeur ; et
durant une période de mesure de l'angle final après que la tôle (W) a été pliée selon l'angle de pliage cible, la suppression de la charge appliquée à la tôle (W), tout en maintenant l'état dans lequel le poinçon (Tp) est en contact avec la tôle (W), le contrôle du mécanisme de levage de table (6L, 6R) pour lever la table supérieure (1) ou pour abaisser la table inférieure (3), et le calcul d'un angle de pliage final de la tôle (W) sur la base de l'angle de la tôle (W) mesuré par le capteur d'angle (21F, 21R),
**caractérisé en ce que** :
le dispositif de contrôle (10) règle une quantité de levage de la table supérieure (1) ou une quantité d'abaissement de la table inférieure (3) pour la suppression de la charge appliquée à la tôle (W) durant la période de mesure de l'angle final, sur la base d'une quantité de levage de la table supérieure (1) ou d'une quantité d'abaissement de la table inférieure (3) pour la suppression de la charge appliquée à la tôle (W) jusqu'à une étape intermédiaire avant la fin de la suppression de la charge durant la période de suppression de charge, ou une quantité de levage de la table supérieure (1) ou une quantité d'abaissement de la table inférieure (3), jusqu'à la fin de la suppression de la charge appliquée à la tôle (W).

6. Procédé de contrôle d'une presse plieuse selon la revendication 5, dans lequel
le dispositif de contrôle (10) règle la quantité de levage de la table supérieure (1) ou la quantité d'abaissement de la table inférieure (3) pour la suppression de la charge appliquée à la tôle (W) jusqu'à l'étape intermédiaire avant la fin de la suppression de la charge durant la période de suppression de charge, comme une première quantité de levage de la table supérieure (1) ou une première quantité d'abaissement de la table inférieure (3) pour la suppression de la charge appliquée à la tôle (W) durant la période de mesure de l'angle final.

7. Procédé de contrôle d'une presse plieuse selon la revendication 5, dans lequel
le dispositif de contrôle (10) règle une quantité de levage obtenue en multipliant la quantité de levage de la table supérieure (1) par un coefficient prédéterminé inférieur à un ou une quantité d'abaissement obtenue en multipliant la quantité d'abaissement de la table inférieure (3) par un coefficient prédéterminé inférieur à un, jusqu'à la fin de la suppression de la charge appliquée à la tôle (W) durant la période de suppression de charge, comme une première quantité de levage de la table supérieure (1) ou une première quantité d'abaissement de la table inférieure (3) pour la suppression de la charge appliquée à la tôle (W) durant la période de mesure de l'angle final.

8. Procédé de contrôle d'une presse plieuse selon la revendication 5, dans lequel
le dispositif de contrôle (10) règle la quantité de levage de la table supérieure (1) ou la quantité d'abaissement de la table inférieure (3), jusqu'à la fin de la suppression de la charge appliquée à la tôle (W) durant la période de suppression de charge, comme une quantité de levage de la table supérieure (1) ou une quantité d'abaissement de la table inférieure (3) pour la suppression de la charge appliquée à la tôle (W) en une seule étape durant la période de mesure de l'angle final.
